# EUROPEAN PATENT APPLICATION

(11) **EP 4 796 504 A1**
(43) Date of publication of application: **26.08.2026**
(21) Application number: 26157959.3
(22) Date of filing: 11.02.2026
(51) Int. Cl.: C02F 1/467, C02F 1/42, C02F 1/44, C02F 1/461, C02F 1/66, C02F 101/36

(54) **METHOD, APPARATUS AND SYSTEM FOR DESTRUCTION OF ORGANIC AND FLUORINATED ORGANIC AQUEOUS CONCENTRATES**

(30) Priority: 21.02.2025 US 202519060333
(71) Applicant: OxByEl Technologies, Inc., Phoenix, AZ 85034 (US)
(72) Inventor: LEGZDINS, Colleen, West Vancouver, V7S1L7 (CA)
(74) Representative: Hertin und Partner Rechts- und Patentanwälte PartG mbB

(57) **Abstract**

The invention of the current application is directed a method and system for destruction of aqueous recalcitrant organic concentrates and fluorinated organic concentrates including aqueous film forming foam (AFFF) fire retardants and high concentrations of perfluoroalkyl and polyfluoroalkyl Substances (PFAS) such as foamate, backwash, still bottoms, filtration reject, and organic-AFFF matrix ancillary waste streams, are generally carried out by high temperature incineration. The method and system including mixing a potassium hydroxide (KOH) electrolyte stream from a KOH electrolyte tank and an aqueous concentrate feed to form an anolyte, mineralizing the anolyte in an anode compartment of an electrolytic mineralization unit to form a treated anolyte, and producing an electrolyzed KOH electrolyte from a KOH electrolyte stream which is fed into a cathode compartment of the electrolytic mineralization unit.

## Description

### BACKGROUND

The destruction of aqueous recalcitrant organic concentrates and fluorinated organic concentrates including aqueous film forming foam (AFFF) fire retardants and high concentrations of perfluoroalkyl and polyfluoroalkyl Substances (PFAS) such as foamate, backwash, still bottoms, filtration reject, and organic-AFFF matrix ancillary waste streams, are generally carried out by high temperature incineration. However, fluorinated organic compounds are difficult to burn, and hazardous by-products end up in the incinerator ash, condensate, and flue gases. In addition, the incineration of hazardous organics and AFFF is known to produce dangerous air pollutants *[ITRC13.1.11 AFFF Disposal IRTC].* For instance, secondary air pollution such as volatile light perfluorinated compounds and fluorinated dioxins have been measured *[*Clayton, J. W. Fluorocarbon toxicity and biological action. Fluor. Chem. Rev. 1, 197-252 (1967*).] [*Weber, R., Schrenk, D., Schmitz, H. J., Hagenmaier, A. & Hagenmaier, H. Polyfluorinated dibenzodioxins and dibenzofurans-synthesis, analysis, formation and toxicology. Chemosphere 30, 629-639 (1995*)].*

In addition, the cost of disposal by high temperature incineration is also expensive, estimated by the USEPA as $4-8/gallon concentrate, and a recent study concluded incinerators emit more greenhouse gas emissions per unit of electricity produced (1707 g CO₂e/kWh) than any other power source (range: 2.4 to 991.1 g CO₂e/kWh). *[*Interim Guidance on the Destruction and Disposal of Perfluoroalkyl and Polyfluoroalkyl, U.S. EPA, December 18, 2020*]. [*Tangri N (2023) Waste incinerators undermine clean energy goals. PLOS Clim 2(6): e0000100*].* Consequently, a less expensive and sustainable destruction process that doesn't generate hazardous secondary pollution and reduces green house gas emissions is needed.

### SUMMARY OF THE INVENTION

The invention of the current application is a low cost, sustainable high voltage electrolytic decomposition method, apparatus and system for the destruction of aqueous organic concentrates and fluorinated organic aqueous concentrates that does not produce hazardous by-products or secondary waste, is energy efficient and captures and sequesters carbon dioxide emissions. The method consists of two main steps, electrolytic mineralization of the organic and/or fluorinated organic compounds and recovery of valuable end-products. This process can be performed continuously or in batches.

An electrochemical reaction involves the transfer of electronic charge across the interface formed between an electrode and an electrolyte which leads to an oxidation or reduction reaction. For the electrolytic oxidation of fluorinated organic and organic chemicals (including PFAS ions and neutral molecules, organic and inorganic compounds), the potential of the working electrode - the anode, is controlled since it determines the intensity of the oxidizing effect.

The electrolytic mineralization step is conducted in one or more divided electrochemical cells with an anionic membrane separator and alkali electrolyte. Suitable electrolytes include one or more soluble alkali salts dissolved in water and/or any base that is soluble in water and forms hydroxide ions (OH⁻), such as sodium hydroxide, potassium hydroxide, magnesium hydroxide, ammonium hydroxide, and/or calcium hydroxide. Potassium hydroxide (KOH) dissolved in deionized water is the preferred electrolyte in this invention. The KOH concentration of the electrolyte may range from 0.001 - 8 Molar, preferably 0.05 - 2 Molar in this invention.

An aqueous KOH electrolyte solution provides both the anolyte and catholyte. The selection of KOH(aq) for the anolyte is to capture product fluoride, carbon dioxide, sulfate, chloride, phosphate and other reaction products, provide neutralization of product acid such as hydrogen fluoride (HF), provide an alkaline pH to prevent volatilization of HF, chlorine, volatile PFAS and organic chemicals, act as a supporting electrolyte to lower energy consumption, and provide a bulk reactant that produces soluble reaction products. The KOH electrolyte reduces the cell current and Joule heating, reduces the heat of neutralization and keeps the anolyte temperature low which prevents chemical volatilization. The alkaline electrolyte also permits the use of inexpensive corrosion resistant reactor components and electrodes.

The organic concentrates and/or fluorinated organic concentrates are proportioned continuously or intermittently into a portion of the potassium hydroxide electrolyte where they are mixed to form the anolyte solution. The amount of proportioning or metering of fluorinated organic and/or organic concentrates into the electrolyte is selected based on the chemical composition of the concentrate(s), rate of destruction per electrode unit area, flow rate and reactor anode area. In general, the proportioning rate may range from 0.5% - 99% and the concentration of KOH increased or decreased according to the stoichometry of concentrate chemicals, the proportioning rate and the desired carbon dioxide capture rate. The KOH molarity is preferrably kept at or slightly in excess of stoichiometry.

The KOH concentration of the electrolyte, anolyte, and/or catholyte are adjusted to maintain molarity and alkalinity. The pH and/or alkalinity is measured to determine the concentration of makeup KOH required to account for neutralization. Similarly makeup water is added to the anolyte when required to achieve the desired concentrate proportioning.

The anolyte solution is passed through one or more anode compartments of one or more divided electrolytic unit cells. The electrolytic mineralization is achieved by the application of an anodic voltage greater than the sum of thermoneutral mineralization voltage plus the anode electrocatalyst overpotential for all of the individual chemicals in the anolyte solution. The thermoneutral voltage E is calculated from the thermodynamic decomposition voltage *E*° at standard conditions and at operating conditions of concentration, temperature and pressure: $E = E ° - \frac{RT}{nF} ln \left(Q\right) and Q = \frac{{\left[products\right]}^{x}}{{\left[reactants\right]}^{y}}$ Where *R* = universal gas constant, *Q* = reaction quotient and at equilibrium *Q = K,* the reaction constant, number of electrons, *n* = number of electrons, *F* = Faraday's constant, *T =* temperature, $E ° = - \frac{Δ G °}{nF} and Δ G ° = \sum Δ G {°}_{products} - \sum Δ G {°}_{reactants} .$

The anodic mineralization product gases are non-toxic oxygen, nitrogen and carbon dioxide (CO₂). The mineralization soluble end-products, including fluoride, are dissolved in the treated anolyte solution. When hydrogen fluoride (HF) is dissolved in potassium hydroxide (KOH), a neutralization reaction occurs. The HF, being an acid, reacts with the KOH, a base, to form water (H₂O) and potassium fluoride (KF), a salt. The balanced chemical equation for this reaction is:

HF(aq) + KOH(aq) → KF(aq) + H₂O (l)

The CO₂ product gas is dissolved in the anolyte solution and captured by reaction with KOH to form dissolved potassium carbonate and/or potassium bicarbonate. The treated anolyte exiting one or more anode compartments is either directed to one or more anode compartments, recirculated through one or more anode compartments and/or directed to the end-product dissolved solids recovery unit.

A portion of the potassium hydroxide electrolye is continuously recirculated through one or more cathode compartments as catholyte. The cathode haf-cell reaction may be either hydrogen evolving or oxygen depolarized. The hydrogen may be captured for energy recovery or safely vented. An oxygen depolarized cathode is preferred to eliminate hazardous hydrogen gas management, lower the cell voltage and reduce energy consumption. The formation of hydrogen is prevented by electrochemical reduction of oxygen to hydroxyl ions. Air and/or oxygen feed to the cathode compartment may be used. The thermodynamic cell voltage for electrolytic decomposition of perfluorooctanoic acid (PFOA) and perfluorooctanesulfonic acid (PFOS) is reduced by more than 40% using an oxygen depolarized cathode.

The electrolytic reactor comprises an array of parallel and optionally consecutive series of unit cells. Each cell is divided with an ion exchange membrane such as a cation selective membrane such as Pemion^{™} or preferably an anionic OH⁻ selective membrane such as Sustainion^{®} X37-50 or other porous separator commonly used in electrolytic processes. The ion selective membrane contributes to the uniformity of the potential distribution. The divided alkaline membrane cell configuration provides design simplification, reduced energy consumption, increased materials stability, lower ohmic resistance and Joule heating, prevents parasitic redox shuttle reactions, increases current efficiency and provides negligible or no cathode fouling. In addition, the alkaline membrane is an effective barrier to the cathode gases which prevents organic and/or fluorinated organic surfactants foaming during treatment.

A porous 3D anode substrate with an electrocatalyst coating provides a high surface area electrode that is corrosion resistant and stable at high voltage. The flow-by porous electrode configuration provides 2 degrees of freedom (thickness and length) making it possible to obtain simultaneously a uniform potential distribution and adequate residence time on the anode electrocatalyst which is more adaptable to large-scale industrial use. The porous substrate geometry provides low electrical resistivity, enhanced product gas removal and mechanical robustness for large scale electrodes. The anode electrocatalyst coating may consist of boron doped diamond, noble metals, metal alloys, mixed metals, metal oxides, mixed metal oxides and/or conductive oxides that are stable in alkali solutions at high voltage such as platinum, palladium, and Raney nickel.

The hydrogen evolving cathode electrocatalyst is composed of low hydrogen overpotential materials in alkaline environments. The preferred materials are nickel, nickel alloys, platinum, palladium, and manganese dioxide. The oxygen depolarized cathode electrocatalyst is composed of low oxygen overpotential materials in alkaline environments. The preferred materials are silver, silver alloys and oxides.

The KOH catholyte passes through one or more cathode compartments where either H₂(g) is evolved or O₂(g) is reduced. The catholyte exiting the cathode compartment is re-circulated back into the KOH electrolyte tank but some or a portion may be directed to the end-product dissolved solids recovery unit.

The anolyte solution flows through one or more anode compartments where the concentrate chemicals undergo electrolytic decomposition and oxidation. The anodic voltage is applied at a value high enough to completely decompose all fluorinated organic and/or organic chemicals in solution. Depending on the concentration of chemicals requiring mineralization in the anolyte, single or multiple passes by recirculating some or all of the anolyte through one or more anode compartments may be conducted. One or more reference electrodes may be used to verify the anode voltage.

Alternatively, the anolyte can be recirculated through the anode compartment at sucessively greater anodic voltages depending on the concentrate's chemical composition. The voltage range is typically between 2 and 5 V_{NHE}. This approach also reduces the energy consumption. To provide for a low carbon footprint, the electricity may be sourced from renewable sources such as wind or solar energy.

For continuous anolyte flow through anode compartments in unit cells in series or recirculation of anolyte through one or more anode compartments, the anode voltage can be applied in one or more subsequently greater voltage steps depending on the composition of the concentrate. The first voltage step may consist of an anodic voltage below 2.8 V_{NHE} to oxidize the organic solvents and metals. The next voltage step is increased to a hydroxyl radical OH* generating voltage 2.8 V_{NHE} to oxidize the chemicals with higher thermodynamic potentials such as hydrocarbon surfactants, aromatic hydrocarbons, aromatic halides and PFAS precursors. The final voltage step provides an anodic voltage at a value greater than the highest decomposition voltage of the fluorinated surfactant chemicals, preferrably greater than or equal to 4 V_{NHE}. This method substanially reduces the energy consumption since the concentration of hydrocarbon solvents, surfactants and other organic chemicals is much greater than fluorinated surfactants in mixtures with aqueous film forming foam concentrates.

The main electrochemical and chemical reactions occuring during the mineralization step are listed in Table 1. Following mineralization the anolyte solution contains the reaction products potassium fluoride (KF), potassium carbonate (K₂CO₃), potassium bicarbonate (KHCO₃), potassium chloride (KCl), potassium hypochlorite (KOCl), potassium phosphate (K₃PO₄), and/or potassium sulfate (K₂SO₄).

The potassium hydroxide anolyte solution captures 30 to over 80% of the product carbon dioxide gas reducing the carbon footprint. The percent of CO₂ gas capture by the KOH anolyte as K₂CO₃ and/or KHCO₃ is a function of the KOH molarity, pH and hydrodynamics. [L. Lombardi et al. Carbon Dioxide Removal and Capture for Landfill Gas Up-grading. Energy Procedia (2011) 4, 465-472*.].*

**Table 1. Electrolytic Reactor Electrochemical and Chemical Reactions**

| **Half-cell reactions at anode catalyst surface** | |
|---|---|
| Perfluorocarboxylic acids (PFCAs) decomposition | CₙF₂ₙ₊₁COOH + 2nH₂O(l) → (n+1)CO₂(g) + (2n+1)F⁻ + (4n+1)H⁺ + 2ne⁻ |
| Perfluorosulfonic acids (PFSAs) decomposition | CₙHF₂ₙ₊₁O₃S + → SO₄²⁻ + nCO₂(g) + (2n+1)F⁻+(4n+3)H⁺ + 2ne⁻ |
| Fluorotelomer alcohols decomposition | F(CF₂CF₂)*ₙ*CH₂CH₂OH + (4n+4)H₂O(l) → (2n+2)CO₂(g) + (4n+1)F⁻ +(8n+13)H⁺ + (4n+12)e⁻ |
| Fluorotelomer sulfonates decomposition | + (2n+5)H₂O(l) → SO₄²⁻ + (2+n)CO₂(g) + (2n+1)F⁻ +(4n+14)H⁺ + (2n+12)e⁻ |
| Organic compound decomposition | CₐH_{b}O_{c}N_{d} + (2a-c)H₂O(l) → aCO₂(g) + dNH₃(l) + (4a-2c+b-3d)H⁺ + (4a-2c+b-3d)e⁻ |
| Ammonia oxidation | 2NH₃ → N₂(g) + 6H⁺ + 6e⁻ (pH > 7) |
| | 2NH₄⁺ → N₂(g) + 8H⁺ + 8e⁻ (pH < 11) |
| Oxygen evolution | 4OH⁻ → O₂(g) + 2H₂O(l) + 4e⁻ |
| OH* generation | H₂O → OH* + H⁺ + e⁻ |

| **Anode compartment chemical reactions** | |
|---|---|
| Formation of potassium fluoride | H⁺ + F⁻ + KOH(aq) → KF(aq) + H₂O(l) |
| CO₂ capture | CO₂(g) + 2KOH(aq) → K₂CO₃(aq) + H₂O(l) |
| | K₂CO₃ + CO₂ + H₂O → 2KHCO₃ (pH <10) |
| Formation of potassium sulfate | 2KOH(aq) + 2H⁺ + SO₄²⁻ → K₂SO₄(aq) + 2H₂O(l) |
| Formation of potassium chloride and potassium hypochlorite | 2KOH(aq) + 2Cl⁻ → KCl(aq) + KOCl(aq) + H₂O(l) |
| Formation of potassium phosphate | 3KOH(aq) + 3H⁺ + PO₄³⁻ → K₃PO₄(aq) + + H₂O(l) |
| Neutralization | OH⁻ + H⁺ → H₂O |

| **Half-cell reactions at cathode catalyst surface** | |
|---|---|
| Evolution of hydrogen | 4H₂O(l) + 4e⁻ → 2H₂(g) + 4OH⁻ |
| Oxygen reduction | H₂O(l) + ½ O₂(g) + 2e⁻ → 2OH⁻ |

The treated anolyte and product gas exits one or more anode compartments where the gas and anolyte are separated. The anode product gas comprises carbon dioxide, nitrogen, and/or oxygen, and may contain trace fugitive fluorinated and organic volatile compounds. The product gas may be passed through activated carbon canisters and/or a thermal oxidizer and/or scrubber, either wet or dry, to remove contaminants and the cleaned gases are then vented to atmosphere. A suitable scrubber is EBARA's fluorine dry scrubber which is capable of abating most PFC gases > 99.9% without producing other harmful by-products like NOx, SOx and hazardous solid wastes. Specifically CF₄, C₂F₆, C₃F₈, SF₆ and other per fluorinated gases are destroyed. The technology utilizes a heated catalyst that both destructs and captures the fluorine compound for gas treatment. The system doesn't require any special fuels or water resulting in low facility requirements and zero waste water generated. Wet scrubbers such as combustion-wash and catalytic-wash technologies may also be used. In these cases, the captured contaminants in the wash are fed to the anode compartment for mineralization.

Depending on the type and concentration of dissolved end-products, the degassed treated anolyte is either re-circulated through the anode compartments, recycled to the KOH electrolyte tank and/or directed to the end-product dissolved solids recovery unit. The solubility of mineralization end- and reaction-products are KF is ≥ 920 g/L, K₂SO₄ is 120 g/L, K₂CO₃ is ≥ 1000 g/L, KOCl ≥ 250 g/L, KCl ≥ 250 g/L, KHCO₃ is ≥ 220 g/L, and K₃PO₄ is ≥ 900g/L. The high solubility of these dissolved solids is advantageous since the anolyte solution may be re-circulated without solids precipitation for an extended period before requiring end-product recovery which reduces the process treatment cost. For example, if the electrolyte used is sodium hydroxide, the solubility of sodium fluoride (NaF) is ≥ 40 g/L, more than 20X lower than potassium fluoride (KF) thereby requiring end-product recovery much more frequently and increasing the treatment cost.

When the concentration of one or more of the dissolved solids reaches 70 - 90% of its solubility limit, the treated anolyte is directed to the end-product dissolved solids recovery unit. The dissolved solids may be removed from the anolyte by chemical precipitation using hydrated lime (calcium hydroxide Ca(OH)₂) with pH adjustment to produce non toxic and non leaching solid precipitates of calcium fluoride, carbonates, sulfates, phosphates, chlorides and/or hydroxides as shown in Table 2. Calcium hydroxide is added at stoichiometry or slightly in excess. The pH is adjusted between 8-12, with pH=11- 11.5 preferred for precipitation.

If the treated anolyte contains dissolved metals, the metals may alternatively be precipitated first with hydrated lime at a pH = 10 before the other dissolved solids are precipitated. The precipitated metals are filtered out and the treated anolyte is then pH adjusted with more lime to a pH ≥ 11.

The precipitation steps are preferably conducted in a solids contact clarifier which combines the functions of chemical treatment, mixing, flocculation, and liquid-solid separation in a single vessel. The treated anolyte is mixed with lime, pH adjusting chemicals, and recycled precipitates. The water then proceeds downward out of the central well, through the sludge blanket of precipitates at the bottom and outward to the clarification zone where precipitates settle. Sludge pumps remove excess precipitates keeping steady state and the clarified anolyte exits through the radial outlets. The clarified anolyte is recycled to the KOH electrolyte tank so that there is no liquid discharge. The excess precipitated solids and aggregates are directed to a dewatering step with the recovered water recycled back to the solids contact clarifier.

Dewatering may be performed by filter press, gravity separation, gravity sedimentation, vacuum filtration, pressure filtration, centrifugal sedimentation and/or filtration. The dried solids are then directed to storage for reuse, off-take sales and/or safe disposal depending on their composition.

**Table 2. Calcium Hydroxide Chemical Precipitation Reactions**

| | |
|---|---|
| Fluoride | KF(aq) + Ca(OH)₂ → KOH(aq) + CaF₂(s) |
| Carbonate | K₂CO₃(aq) + Ca(OH)₂ → CaCO₃(s) + 2KOH(aq) |
| Sulfate | K₂SO₄(aq) + Ca(OH)₂ → CaSO₄(s) + 2KOH(aq) |
| Chloride | KCl(aq) + Ca(OH)₂ → CaCl₂(s) + KOH(aq) |
| Phosphate | 2K₃PO₄(aq) + 3Ca(OH)₂ → Ca₃(PO₄)₂(s) + 6KOH(aq) |
| Adsorption | F⁻ and other ion adsorption on precipitated solids |

Additional treatment to remove divalent ions such as calcium and sulfate not removed during lime precipitation may periodically be performed by membrane nanofiltration of the anolyte, KOH electrolyte and/or catholyte. Preferrably the anolyte is passed through one or more nanofiltration filters such as FilmTec^{™} SR90 and NF 270. The resulting membrane reject is recirculated back to the solids contact clarifier, and the filtered anolyte is directed to either the KOH electrolyte tank or optionally to further purification by selective anion and/or multivalent cation ion exchange.

The electrolyte may be passed through one or more anion exchange resin beds to remove residual anions such as chloride, carbonate and phosphate. The KOH electrolyte may pass through one or more cation exchange beds to remove multivalent cations such as metals and calcium. The resin beds backwash is recycled back to the solids contact clarifier and the purified KOH electrolyte is directed to the KOH electrolyte tank.

### Example 1. Destruction of AFFF Concentrate

Commercial AFFF firefighting concentrates are a complex, proprietary mixture of many components. The formulations are water based and mainly include fluorocarbon surfactants, organic solvents and hydrocarbon surfactants. The concentrates may or may not also contain small amounts of foam stabilizers (metal salts), bactericides, corrosion inhibitors, freeze point depressants and inorganic salts. Table 3 lists the type of PFAS substances identified in AFFF Foams *[*Wood, Ramboll, & COWI, Report June 2020: The use of PFAS and fluorine-free alternatives in fire - fighting foams. European Commission DG Environment/ European Chemicals Agency (ECHA)*].*

**Table 3. PFAS substances identified in AFFF Foams**

| PFAS classification | Generalized chemical structure | # C-atoms |
|---|---|---|
| Perfluorocarboxylic acids (PFCAs) | CₙF₂ₙ₊₁-COOH | n > 4 |
| Perfluorosulfonic acids (PFSAs) | CₙF₂ₙ₊₁-SO₃H | n > 2 |
| | CₙF2ₙ₊₁-SO₂-R | n > 4 |
| Fluorotelomer-based substances | CₙF₂ₙ₊₁-C₂H₄-R | n > 4 |
| | CₙF₂ₙ₊₁-CₘHₘ₊₁-R | n > 4 |
| | CₙF₂ₙ₊₁-CHF-CₘHₘ₊₁-R | n > 4 |
| Perfluoroalkyl ether-based substances | CₙF₂ₙ₊₁-O-CₘF2ₘ₊₁ | n > 2 |
| | CₙFₙ₊₁-CO-CₘFₘ₊₁ | n > 2 |
| Where R = NH, NHCH₂CH₂OH, etc. | | |

Given the wide range of proprietary substances and their concentrations in commercial AFFF concentrates, a reference AFFF concentrate (Ref-AFFF) using commercially available chemicals that is well-defined has been developed and is shown in Table 4. *[*Katherine M. Hinnant, Spencer L. Giles, Arthur W. Snow, John P. Farley, James W. Fleming, Ramagopal Ananth. An Analytically defined fire-supressingfoam formulation for evaluation of fluorosurfactant replacement. J. Surfact. Deterg. (2018) 21:711-722. DOI 10.1002/jsde.12166*.]* The Ref-AFFF formulation serves as a reference point of know composition with MilSpec extinction qualification at 3% proportioning concentration. From the composition of the Ref-AFFF concentrate, an equivalent and well-defined AFFF concentrate formulation shown in Table 5 is used for this example.

**Table 4. Ref-AFFF Composition**

| **Commercial Ingredient** | **Type** | **Reference ingredient** | **Volume % in distilled H₂O** |
|---|---|---|---|
| Capstone^{®} 1157, Forafac^{®} 1157 | fluorosurfactant | Tridecafluorooctyl sulfonamide | 0.3 |
| Glucopon^{®} 215 UP | hydrocarbon surfactant | Poly-D-glucopyranose | 0.2 |
| Butyl Carbitol^{®}, DGBE (diethylene glycol monobutyl ether) | glycol ether solvent | Diethylene glycol monobutyl ether | 0.5 |

**Table 5. Reference AFFF Concentrate Formulation**

| **Reference Ingredient** | **Molecular formula** | **Concentrate (parts by weight)** |
|---|---|---|
| 6:2 fluorotelomer sulfonamide alkylbetaine (6:2 FTAB) | C₆F₁₃C₂H₄SO₂-NHC₃H₆N+(CH₃)₂CH₂COO- | 3 |
| D-Glucopyranose, oligomeric, C10-16-alkyl glycosides | C₁₈H₃₆O₆ | 2 |
| Diethylene glycol butyl ether | C₈H₁₈O₃ | 5 |
| Distilled water | H₂O | 20 |

For the treatment of the AFFF concentrate shown in Table 5, a 0.5M KOH electrolyte solution is used for both anolyte and catholyte. The AFFF concentrate is fed at a rate of 30 kg/hr into KOH electrolyte and mixed to form the anolyte at a flow rate of 1 m³/hr. The anolyte AFFF concentration at the reactor inlet is shown in Table 6. The anolyte passes through one or more anode compartments where mineralization of the organics and fluorinated organic ingredients takes place.

The KOH electrolyte provides the catholyte which is continuously recirculated from the electrolyte tank through one or more cathode compartments. The flow rate is dependent on the compartment size and hydrodynamics. Typically, the catholyte flow rate matches the anolyte flow rate. For an oxygen depolarized cathode, air or oxygen is also fed to the cathode. For a hydrogen evolving cathode, the product hydrogen is separated from the catholyte exiting one or more cathodes and safely vented.

**Table 6. Anolyte AFFF Composition**

| **Reference Ingredient** | **Molecular formula** | **Concentration (gm/L)** | **Molar Concentration [mmol/L]** |
|---|---|---|---|
| 6:2 fluorotelomer sulfonamide alkylbetaine (6:2 FTAB) | C₆F₁₃C₂H₄SO₂-NHC₃H₆N+(CH₃)₂ CH₂COO- | 3 | 5.26 |
| D-Glucopyranose, oligomeric, C10-16-alkyl glycosides | C₁₈H₃₆O₆ | 2 | 5.70 |
| Diethylene glycol butyl ether | C₈H₁₈O₃ | 5 | 30.80 |

Once mineralization has been completed, the composition and concentration of the treated anolyte exiting one or more anode compartments is shown in Table 7. The percent of CO₂ gas capture by the KOH anolyte as K₂CO₃ is approximately 40% and the remaining CO₂(g) is vented in the product gas stream. A higher molar concentration of KOH in the anolyte will remove more CO₂ gas if desired. The concentration of dissolved solids in the treated anolyte is below their solubility limits so the anolyte may be recirculated through the anode compartment and proportioned continuously or intermittently with AFFF concentrate with or without makeup KOH.

The treated anolyte is directed to the end-product dissolved solids recovery unit, in this example a solids contact clarifier. A stoichometric amount of calcium hydroxide is added to the treated anolyte in a solids contact clarifier. The composition and concentration of the resulting precipitated solids and lime are shown in Table 7. The clarified KOH anolyte is then recycled to the KOH electrolyte tank so that there is zero liquid discharge. If there are no process losses, the weight of recovered KOH equals the starting anolyte KOH weight, shown in Table 7. Makeup KOH may be added due to precipitation process losses and/or dilution. The recovered precipitated solids are subsequently dewatered and dried for re-use and/or safe disposal. The recovered water from dewatering is returned to the solids contact clarifier. This process can be performed continuously or in batches.

**Table 7. Mass Balance for AFFF Concentrate Destruction**

| **Anode Influent Parameters** | | **Unit** | **Value** |
|---|---|---|---|
| Concentration of KOH electrolyte | | Molar | 0.5 |
| Feed rate of AFFF concentrate | | kg/hr | 30 |
| Volume of AFFF-KOH anolyte | | m³ | 1 |
| Anolyte Flow rate | | m³/hr | 1 |
| | | | |

| **Composition and Concentration of Anolyte** | | | |
|---|---|---|---|
| | C₆F₁₃C₂H₄SO₂-NHC₃H₆N+(CH₃)₂CH₂COO- | kg/m³ | 3 |
| | C₁₈H₃₆O₆ | kg/m³ | 2 |
| | C₈H₁₅O₃ | kg/m³ | 5 |
| KOH concentration in anolyte | | kg/m³ | 28.05 |
| | | | |

| **Composition and Concentration of Treated Anolyte** | | | |
|---|---|---|---|
| CO₂ (g) product (60%) | | kg/hr | 11.32 |
| N₂ (g) product | | kg/hr | 0.15 |
| KF (aq) product | | kg/hr | 3.97 |
| K₂CO₃ (aq) (40% CO₂ gas capture) | | kg/hr | 23.7 |
| K₂SO₄ (aq) | | kg/hr | 0.92 |
| KOH remaining | | kg/hr | 4.38 |
| | | | |

| **Composition and Concentration of the Precipitated Solids** | | | |
|---|---|---|---|
| Ca(OH)₂ supplied | | kg/hr | 18.17 |
| CaF₂ precipitated | | kg/hr | 5.34 |
| CaCO₃ precipitated | | kg/hr | 17.17 |
| CaSO₄ precipitated | | kg/hr | 0.72 |
| | | | |

| **Concentration of Clarified KOH Returned to KOH Electrolyte Tank** | | | |
|---|---|---|---|
| Clarified KOH leaving clarifier | | Kg/hr | 28.05 |

In some embodiments a method including the following steps is used:
mixing a potassium hydroxide (KOH) electrolyte stream from a KOH electrolyte tank and an aqueous concentrate feed to form an anolyte,
mineralizing the anolyte in an anode compartment of an electrolytic mineralization unit to form a treated anolyte, and
producing an electrolyzed KOH electrolyte from a KOH electrolyte stream which is fed into a cathode compartment of the electrolytic mineralization unit.

In some embodiments, the method further includes recycling the electrolyzed KOH electrolyte to the KOH electrolyte tank.

In some embodiments, the method further includes that the electrolyzed KOH electrolyte is mixed with a clarified and filtered anolyte stream to form a hard-electrolyzed KOH electrolyte and passed through a cation exchange bed and an anion exchange bed within an ion exchange unit to reform the electrolyzed KOH electrolyte and extracting a resin bed backwash.

In some embodiments, the method further includes mixing the treated anolyte with calcium hydroxided in a solids contact clarifier to form a clarified anolyte.

In some embodiments, the method further includes filtering the clarified anolyte in a nanofiltration unit to form a filter reject stream from the clarified electrolyte, wherein the filter reject stream is recycled to the solids contact clarifier.

In some embodiments, the method further includes recycling the electrolyzed KOH electrolyte to the KOH electrolyte tank, where during recycling, the electrolyzed KOH electrolyte is mixed with the clarified and filtered anolyte stream to form a hard-electrolyzed KOH electrolyte and passed through a cation exchange bed and an anion exchange bed within an ion exchange unit to reform the electrolyzed KOH electrolyte and extracting a resin bed backwash.

In some embodiments, the method further includes feeding KOH from a KOH makeup tank to the reformed electrolyzed KOH electrolyte.

In some embodiments, the method further includes cleaning the anodic product gas to form clean gas and venting the clean gas, and storing the cathode product hydrogen gas in a storage unit.

In some embodiments, the electrolytic mineralization unit additionally forms a anodic product gas and a cathode product hydrogen gas.

In some embodiments, a portion of the treated anolyte is recycled directly from the electrolytic mineralization unit and mixed with the potassium hydroxide (KOH) electrolyte stream from the KOH electrolyte tank.

In some embodiments, a system is provide which includes:
a first potassium hydroxide (KOH) electrolyte stream wherein the first (KOH) electrolyte stream is in fluid connection to a KOH electrolyte tank and to an anode compartment of an electrolytic mineralization unit,
a second KOH electrolyte stream wherein the second (KOH) electrolyte stream is in fluid connection to a KOH electrolyte tank and to a cathode compartment of the electrolytic mineralization unit,
a treated anolyte stream in fluid connection to the anode compartment of the electrolytic mineralization unit and
an electrolyzed KOH electrolyte stream in fluid connection with the cathode compartment of the electrolytic mineralization unit.

In some embodiments, the system further includes a clarified and filtered anolyte stream in fluid connection with the electrolyzed KOH electrolyte stream, wherein the clarified and filtered anolyte stream and the electrolyzed KOH electrolyte stream are joined to form a hard-electrolyzed KOH electrolyte stream.

In some embodiments, the hard-electrolyzed KOH electrolyte stream is in fluid connection with an ion exchange unit.

In some embodiments, the system further a softened KOH electrolyte stream is in fluid connection with the ion exchange unit and the KOH electrolyte tank.

In some embodiments, the hard-electrolyzed KOH electrolyte stream is split into two streams where the first hard-electrolyzed KOH electrolyte stream is in fluid connection with an ion exchange unit and the second hard-electrolyzed KOH electrolyte stream is in fluid connection with the softened KOH electrolyte stream, and the second hard-electrolyzed KOH electrolyte stream and the softened KOH electrolyte stream are joined to form a reformed KOH electrolyte stream which is in fluid connection with the KOH electrolyte tank.

In some embodiments, the treated anolyte stream is in fluid connection with a solids contact clarifier.

In some embodiments, the system further includes a clarified anolyte stream in fluid connection with the solids contact clarifier.

In some embodiments, the clarified anolyte stream is split into a first and second stream wherein the first clarified anolyte stream pass through a nanofiltration unit and then rejoins the second clarified anolyte stream to form a clarified and filtered anolyte stream.

In some embodiments, the clarified and filtered anolyte stream joins the electrolyzed KOH electrolyte stream, wherein the clarified and filtered anolyte stream and the electrolyzed KOH electrolyte stream are joined to form a hard-electrolyzed KOH electrolyte stream.

In some embodiments, the hard-electrolyzed KOH electrolyte stream is returned to the KOH electrolyte tank.

### BRIEF DESCRIPTION OF THE DRAWING

The features of the disclosure believed to be novel and the elements characteristic of the invention are provided below with specificity in the appended claims. The figure is for illustration and exemplary purposes only and not drawn to scale. The disclosure itself, however, both as to organization and method of operation, can best be understood by reference to the description which follows, taken in conjunction with the accompanying drawing in which:
The Figure shows the layout of the destruction unit and process 100 with electrolytic mineralization unit 200 and solids contact clarifier 300.

### DETAILED DESCRIPTION OF DRAWINGS

The embodiments in the disclosure herein can comprise, consist of, and consist essentially of the features and/or steps described herein. In addition, the embodiments may include additional or optional components, steps, or limitations which are described herein or which would otherwise be appreciated by one of skill in the art. It is to be understood that all concentrations disclosed herein are by weight percent (wt. %.) based on a total weight of the composition unless otherwise indicated.

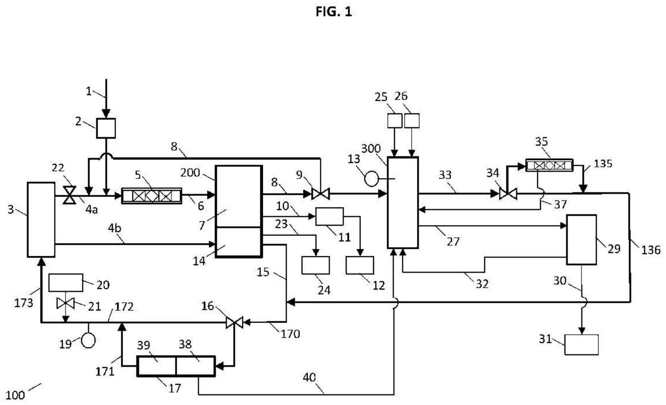

**Fig. 1** shows an example of the layout of the destruction process **100** with electrolytic mineralization unit **200** and solids contact clarifier **300** in a preferred configuration. The KOH electrolyte tank **3** contains a molar solution of KOH dissolved in deionized water. Aqueous concentrate **1** containing organic and fluorinated organic compounds is added to a feed of KOH electrolyte **4a** from the KOH electrolyte tank **3** by proportioning unit **2.** The aqueous concentrate **1** and KOH electrolyte **4a** are mixed while passing through an inline static mixer **5** and the resulting mixture forms the anolyte **6** that is directed to one or more anode compartments **7** of electrolytic mineralization unit **200** where mineralization of the organic and fluorinated organic compounds occurs.

The organic and fluorinated organic compounds in anolyte **6** are mineralized while passing through one or more anode compartments **7.** The treated anolyte **8** exits one or more anode compartments **7** and is directed to valve **9.** If the concentration of the dissolved solids in the treated anolyte **8** is below 90%, or preferably below 70% of their solubility limit, the treated anolyte **8** is directed by valve **9** to the KOH electrolyte **4a** feed. Valve **22** reduces an equivalent volume of the KOH electrolyte **4** feed from the KOH electrolyte tank **3** to accommodate the additional volume of recycled treated anolyte **8.** If the concentration of one or more dissolved solids in the treated anolyte **8** is 70 - 90% of the solubility limit, the treated anolyte **8** is directed by valve **9** to the solids contact clarifier **300** where removal and recovery of the dissolved solids occurs. If the concentration of one or more dissolved solids in the treated anolyte **8** is less than 70 - 90% of the solubility limit, the treated anolyte **8** is directed by valve **9** to electrolyte **4a.** The anodic product gases **10** exit the anode compartments **7** and are directed to a gas cleaning unit **11** comprised of one or more activated carbon canisters. If present, fugitive volatile organic and fluorinated organic contaminants are removed from the product CO₂ and oxygen gas by adsorption onto the carbon. The clean product CO₂ and oxygen gas **12** exit unit **11.**

KOH electrolyte **4b** from the KOH electrolyte tank **3** is fed to one or more cathode compartments **14** of electrolytic mineralization unit **200.** The cathodic half-cell water electrolysis reaction generates hydrogen gas as the KOH electrolyte **4b** passes through one or more cathode compartments **14.** The cathode product hydrogen gas **23** exits the cathode compartments and is directed to storage unit **24.** The electrolyzed KOH electrolyte **15** exits the cathode compartments **14** and is mixed with clarified and filtered anolyte **136** to make hard-electrolyzed KOH electrolyte **170.** Some or all the hard-electrolyzed KOH electrolyte **170** is directed by valve **16** to the KOH electrolyte tank **3** or to the ion exchange unit **17** for further removal of end-product dissolved solids.

Multivalent and metal cations are removed from the hard-electrolyzed KOH electrolyte **170** while passing through the cation exchange bed **38** and residual anions are removed from the hard-electrolyzed KOH electrolyte **170** while passing through the anion exchange bed **39** in ion exchange unit **17.** The ion exchange unit **17** backwash **40** is directed to the solids contact clarifier **300**.

The softened KOH electrolyte **171** exits the ion exchange unit **17** and is optionally mixed with hard-electrolyzed KOH electrolyte **170** to make reformed KOH electrolyte **172** which is directed to the KOH electrolyte tank **3.** Before entering the KOH electrolyte tank **3,** the concentration of KOH in the reformed KOH electrolyte **172** is measured by sensor **19.** If the KOH concentration has been diluted, makeup KOH in KOH makeup tank **20** is dosed by valve **21** into reformed KOH electrolyte **172** to make returned KOH electrolyte **173** which is directed to the KOH electrolyte tank **3.**

The treated anolyte **8** is directed by valve **9** to solids contact clarifier **300** which removes the mineralization end-product dissolved solids by solids precipitation. The treated anolyte **8** is mixed with hydrated lime (calcium hydroxide Ca(OH)₂) **25,** and pH adjusting chemicals **26** to precipitate out dissolved solids. The pH is measured by sensor **13** and is controlled to pH 11-11.5 using the pH adjusting chemicals **26.** The excess solids precipitate sludge **27** exits the solids contact clarifier **300** and is directed to a dewatering unit **29** where the precipitated solids are dewatered and recovered. The dewatered solids **30** are directed to storage **31** and the recovered water **32** is recycled back to the solids contact clarifier **300.**

The clarified anolyte **33** exits the solids contact clarifier **300** and is directed to valve **34.** Periodically, some or all the clarified anolyte **33** is directed by valve **34** to a nanofiltration unit **35** to remove microparticles, nanoparticles, and divalent ions such as calcium and sulfate not removed during precipitation. The clarified anolyte **33** is filtered by the nanofiltration unit **35** and the filtered anolyte **135** is mixed with the clarified anolyte **33** to make clarified and filtered anolyte **136.** The clarified and filtered anolyte **136** is then mixed into the electrolyzed KOH electrolyte **15** to make hard-electrolyzed KOH electrolyte **170.** The filter reject **37** exits the nanofiltration unit **35** and is returned to the solids contact clarifier **300**.

## Claims

1. A method comprising:
mixing a potassium hydroxide (KOH) electrolyte stream from a KOH electrolyte tank and an aqueous concentrate feed to form an anolyte,
mineralizing the anolyte in an anode compartment of an electrolytic mineralization unit to form a treated anolyte, and
producing an electrolyzed KOH electrolyte from a KOH electrolyte stream which is fed into a cathode compartment of the electrolytic mineralization unit.

2. The method of claim 1 further comprising:
recycling the electrolyzed KOH electrolyte to the KOH electrolyte tank.

3. The method of claim 2 wherein the electrolyzed KOH electrolyte is mixed with a clarified and filtered anolyte stream to form a hard-electrolyzed KOH electrolyte and passed through a cation exchange bed and an anion exchange bed within an ion exchange unit to reform the electrolyzed KOH electrolyte and extracting a resin bed backwash.

4. The method of claim 1 further comprising:
mixing the treated anolyte with calcium hydroxided in a solids contact clarifier to form a clarified anolyte.

5. The method of claim 4 further comprising:
filtering the clarified anolyte in a nanofiltration unit to form a filter reject stream from the clarified electrolyte, wherein the filter reject stream is recycled to the solids contact clarifier.

6. The method of claim 4 further comprising:
recycling the electrolyzed KOH electrolyte to the KOH electrolyte tank,
wherein during recycling, the electrolyzed KOH electrolyte is mixed with the clarified and filtered anolyte stream to form a hard-electrolyzed KOH electrolyte and passed through a cation exchange bed and an anion exchange bed within an ion exchange unit to reform the electrolyzed KOH electrolyte and extracting a resin bed backwash.

7. The method of claim 6 further comprising:
feeding KOH from a KOH makeup tank to the reformed electrolyzed KOH electrolyte.

8. The method of claim 6 further comprising:
cleaning the anodic product gas to form clean gas and venting the clean gas, and
storing the cathode product hydrogen gas in a storage unit.

9. A system comprising:
a first potassium hydroxide (KOH) electrolyte stream wherein the first (KOH) electrolyte stream is in fluid connection to a KOH electrolyte tank and to an anode compartment of an electrolytic mineralization unit,
a second KOH electrolyte stream wherein the second (KOH) electrolyte stream is in fluid connection to a KOH electrolyte tank and to a cathode compartment of the electrolytic mineralization unit,
a treated anolyte stream in fluid connection to the anode compartment of the electrolytic mineralization unit and
an electrolyzed KOH electrolyte stream in fluid connection with the cathode compartment of the electrolytic mineralization unit.

10. The system of claim 9 additionally comprising a clarified and filtered anolyte stream in fluid connection with the electrolyzed KOH electrolyte stream, wherein the clarified and filtered anolyte stream and the electrolyzed KOH electrolyte stream are joined to form a hard-electrolyzed KOH electrolyte stream.

11. The system of claim 10 wherein the hard-electrolyzed KOH electrolyte stream is in fluid connection with an ion exchange unit.

12. The system of claim 11 wherein a softened KOH electrolyte stream is in fluid connection with the ion exchange unit and the KOH electrolyte tank.

13. The system of claim 12 wherein the hard-electrolyzed KOH electrolyte stream is split into two streams where the first hard-electrolyzed KOH electrolyte stream is in fluid connection with an ion exchange unit and the second hard-electrolyzed KOH electrolyte stream is in fluid connection with the softened KOH electrolyte stream, and
wherein the second hard-electrolyzed KOH electrolyte stream and the softened KOH electrolyte stream are joined to form a reformed KOH electrolyte stream which is in fluid connection with the KOH electrolyte tank.

14. The system of claim 9 wherein the treated anolyte stream is in fluid connection with a solids contact clarifier.

15. The system of claim 14 wherein hard-electrolyzed KOH electrolyte stream is returned to the KOH electrolyte tank.
